# EUROPÄISCHE PATENTSCHRIFT

(11) **EP 0 527 987 B1**
(45) Veröffentlichungstag und Bekanntmachung des Hinweises auf die Patenterteilung: **02.11.1995**
(21) Anmeldenummer: 92905422.9
(22) Anmeldetag: 27.02.1992
(51) Int. Cl.: G01N 25/18

(54) **VERFAHREN ZUR BESTIMMUNG VON CHEMISCHEN UND/ODER PHYSIKALISCHEN EIGENSCHAFTEN EINER GASATMOSPHÄRE**
METHOD FOR DETERMINING CHEMICAL AND/OR PHYSICAL PROPERTIES OF A GASEOUS ATMOSPHERE
PROCEDE POUR LA DETERMINATION DE PROPRIETES CHIMIQUES ET/OU PHYSIQUES D'UNE ATMOSPHERE GAZEUSE

(30) Priorität: 07.03.1991 DE 4107295
(43) Veröffentlichungstag der Anmeldung: 24.02.1993
(73) Patentinhaber: Ritschel, Manfred Dr. rer. nat., D-53332 Bornheim (DE)
(72) Erfinder: Ritschel, Manfred Dr. rer. nat., D-53332 Bornheim (DE)
(74) Vertreter: Langmaack, Jürgen, Dipl.-Ing.
(86) Internationale Anmeldenummer: EP9200429
(87) Internationale Veröffentlichungsnummer: WO9215865

(56) Entgegenhaltungen:
- EP-A- 0 254 906
- EP-A- 0 431 394
- DE-A- 2 039 515
- DE-A- 3 005 121
- US-A- 2 508 572

## Beschreibung

Die Erfindung betrifft ein Verfahren zur Bestimmung von chemischen und/oder physikalischen Eigenschaften und/oder Zuständen einer Gasatmoshäre, wobei die zu untersuchende Gasatmosphäre mit einer beheizbaren Oberfläche in Berührung gebracht wird.

Die Bestimmung der chemischen Eigenschaften einer Gasatmosphäre betrifft im wesentlichen die Frage, aus welchem Gas die Gasatmosphäre besteht, oder bei Gasmischungen, ob ein oder mehrere bestimmte Gase in der Gasatmosphäre vorhanden sind, wie dies beispielsweise für die Überprüfung im Kohlebergbau in bezug auf das Vorhandensein von Grubengasen, insbesondere Methangas, durchgeführt wird. Derartige Bestimmungen der Zusammensetzung von Gasatmosphären bzw. die Überprüfung auf die Anwesenheit bestimmter Gasarten in einer Gasatmosphäre stellen das Haupteinsatzgebiet derartiger Verfahren dar. Die Bestimmung der physikalischen Eigenschaften und/oder physikalischen Zuständen einer Gasatmosphäre im Sinne der vorliegenden Erfindung betrifft in erster Linie die Bestimmung der Leifähigkeit, Konvektion, Wärmetönung, sowie Strömungsgeschwindigkeit Druck und Temperatur der zu prüfenden Gasatmosphäre. Der Begriff Gasatmosphäre umfaßt sowohl ein reines Gas als auch Gasgemische.

Derartige Bestimmungen einer Gasatmosphäre wurden bisher in der Weise durchgeführt, daß ein mit elektrischem Strom beheizter Draht mit thermokatalytischen Eigenschaften in einem die zu bestimmende Gasatmosphäre enthaltenden, vorzugsweise von der zu bestimmenden Gasatmosphäre durchströmten Raum angeordnet wurde, wobei der Heizdraht mit entsprechend angepaßten Widerständen in einer Wheatstoneschen Brücke verschaltet wurde. Mit Hilfe einer derartigen Anordnung läßt sich beispielsweise die von einem vorbeiströmenden Gas abgeführte Wärmemenge messen und bei entsprechender Eichung Angaben über die Strömungsgeschwindigkeit machen (vgl. Friedr. Oehme, "Chemische Sensoren", 1991, Bild 6 - 12).

Die Bestimmung der Anwesenheit bestimmter Gasarten in der zu prüfenden Gasatmosphäre ist mit dem vorbekannten Verfahren nur dann möglich, wenn die Gasatmosphäre auf die Anwesenheit reaktiver Gase zu prüfen ist, beispielsweise die Anwesenheit von Methangas oder dergl.. Durch die Vorgabe einer bestimmten thermokatalytischen Temperatur am Heizdraht erfolgt bei Anwesenheit eines reaktiven Gases die Reaktion mit den übrigen in der Gasatmosphäre enthaltenen Gasen, beispielsweise Methan mit dem Luftsauerstoff eine Temperaturerhöhung, die dann die Wheatstonesche Brücke "verstimmt", so daß hier ein Signal ausgelöst werden kann.

Aus DE-A-2 039 515 ist ein Gasdetektor für die Erkennung und Anzeige brennbarer Gase in einer Gasatmosphäre beschrieben, der mit einem Heizdraht versehen ist, welcher elektrisch bis an die Grenze zum Glühen auf Dauer vorgeheizt ist. Diesem Heizdraht ist ein photoelektrischer Sensor zugeordnet, der mit einem Signalgeber verbunden ist. Sobald in der Umgebung des Heizdrahtes brennbare Gase vorhanden sind, beginnt dieser aufgrund der chemischen Reaktion zwischen den brennbaren Gasen und dem Luftsauerstoff zu glühen, wobei dieses Glühen sich bis zum Weißglühen hin steigern kann.

Neben den vorstehend erwähnten, sehr eingeschränkten Einsatzmöglichkeiten der vorbekannten Verfahren besteht ein weiterer Nachteil in der Verwendung der Wheatstoneschen Brücken-Schaltung als Meßsystem. Eine derartige Brückenschaltung ist in sich in erheblichem Maße temperaturabhängig, da die mit dem Heizdraht verschalteten Widerstände für sich ebenfalls Temperatureinflüssen unterliegen, so daß die Brückenschaltung auch dann verstimmt wird und Fehlmessungen erfolgen, wenn aufgrund äußerer Temperatureinflüsse die in die Schaltung eingesetzten Widerstände Temperaturschwankungen unterworfen sind und damit eine Veränderung des Nullabgleichs der Schaltung bewirkt wird. Ein weiterer Nachteil der vorbekannten Verfahrensweise besteht darin, daß für die ständige Beheizung des mit der Gasatmosphäre in Verbindung stehenden Heizdrahtes ein erheblicher Strombedarf erforderlich ist, so daß für mobile Meßgeräte Stromakkumulatoren mit großer Kapazität erforderlich sind, die trotzdem nur eine beschränkte Einsatzzeit erlauben, bis sie wieder aufgeladen werden müssen. Ein weiterer Nachteil des vorbekannten Verfahrens besteht darin, daß das System mit verhältnismäßig langen Ansprechzeiten arbeitet. Da auch Überhitzungen des Heizdrahtes auftreten können, die das Verhalten des Drahtes verändern, muß nach jedem Ansprechen des Gerätes eine neue Eichung vorgenommen werden. Ein derartiges Meßgerät ist instabil und für den Dauereinsatz, beispielsweise zu Uberwachungszwecken, nicht geeignet.

Aus EP-A- 0 254 906 ist ein Gerät zur Messung der Temperaturleitfähigkeit von Gasen bekannt, daß auf einer Wheatstone'schen Brückenschaltung aufgebaut ist. Die Wärmeleitfähigkeit wird hierbei über eine Spannungsmessung an der Wheatstone'schen Brücke bestimmt, wobei die Wheatstone'sche Brücke in einem fest vorgegebenen Zeittakt alternierend mit einer niedrigen und einer hohen Speisespannung beaufschlagt wird. Die einzelnen unmittelbar aufeinanderfolgenden Signal-peaks werden integriert, so daß als Signalanzeige nur bei einer über das vorgegebene Spannungsmaß hinausgehenden Spannungsveränderung diese Spannungsänderung als Maß für die Wärmeleitfähigkeit und damit als Meßsignal zur Verfügung steht. Auch dieses Verfahren weist die vorstehend erörterten Nachteile eines dauernden Stromverbrauchs auf.

Der Erfindung liegt nun die Aufgabe zugrunde, ein Verfahren zu schaffen, mit dessen Hilfe praktisch alle Gasarten in einer Gasatmosphäre bestimmbar bzw. Veränderungen in der Zusammensetzung und/oder physikalischen Eigenschaften und/oder der physikalischen Zustände einer Gasatmosphäre bestimmbar sind, wobei sowohl der Stromverbrauch verringert und die Ansprechzeit verkürzt sind.

Diese Aufgabe wird erfindungsgemäß durch das im Anspruch 1 angegebene Verfahren gelöst. Dieses Verfahren bietet eine Reihe von Vorteilen: Die zeitlich und auch in der Höhe begrenzte Aufheizung der Oberfläche kann direkt mittels eines stromdurchflossenen Drahtes oder indirekt mittels einer Temperaturstrahlung, beispielsweise mittels Laserstrahl oder anderen wärmeerzeugenden Strahlungsarten (Mikrowellen, Induktion) bewirkt werden. Für die Energiezufuhr, beispielsweise den Heizstrom wird Zumindest eine obere Schwelle vorgelegt, die auf den jeweiligen Anwendungsfall abgestimmt ist und diese begrenzt. Ein weiterer Vorteil des erfindungsgemäßen Verfahrens besteht beispielsweise darin, daß sowohl die Anwesenheit reaktiver Gase in Gasgemischen als auch nicht-reaktive Gase bereits bei Temperaturen erfaßbar sind, die unterhalb der Reaktionstemperatur liegen, da diese Relationen ausschließlich durch die Leitfähigkeit und das Wärmeaufnahmevermögen der Gase bzw. der Gasmischung bestimmt wird. Hieraus ergibt sich dann insbesondere für die Feststellung reaktiver Gase der Vorteil, daß bei entsprechender Ausbildung sich das erfindungsgemäße Verfahren als explosionsgeschütztes System in einfacher Weise ausbilden läßt, da je nach Ausgestaltung der Verfahrensweise darauf verzichtet werden kann, daß für die Bestimmung des Gases überhaupt eine chemische Reaktion stattfindet. Der besondere Vorteil des erfindungsgemäßen Verfahrens ist daran zu sehen, daß beispielsweise bei einem stromdurchflossenen Draht nicht die durch die Wärmeabgabe erfolgende Änderung des Stroms und/oder der Spannung als solche zur Erzeugung eines Meßsignals erfaßt wird, sondern die Temperaturänderung der beheizten Oberfläche.

Dies erfolgt nun nicht dadurch, daß die jeweilige Energiezufuhr (Strom oder Spannung) bzw. Energieabgabe (Strahlungsintensität) direkt als Maß zugrundegelegt wird, sondern daß ihre Verknüpfung mit der Zeit die Basis zur Erzeugung des Meßsignals bildet, d. h. in welcher Zeit wird eine Energiemenge zugeführt bzw. abgegeben. Hierbei kann entweder die Energiemenge bei konstanter Zeit bestimmt werden oder aber die Zeit bestimmt werden, in der eine vorgegebene Schwelle der Energiezufuhr bzw. Energieabgabe erreicht wird. Basis für das Meßsignal ist immer die Änderung in Abhängikeit von der Zeit. Hierdurch ergibt sich eine kurze Ansprechzeit, da die Temperaturänderungen in der 4. Potenz erfolgen. Beispielsweise bei der Verwendung eines Heizdrahtes kann somit auch eine Überhitzung, d.h. die Aufheizung über eine zulässige Temperatur vermieden werden, da bei Erreichen des vorgegebenen Schwellenwertes zugleich mit der Auslösung eines Meßsignals auch die Energiezufuhr zurückgenommen oder ganz abgeschaltet werden kann. Dies ist für einfache Dauerüberwachungsaufgaben von besonderem Vorteil.

In gleicher Weise lassen sich auch physikalische Zustände der betreffenden Gasatmosphäre wir Druck, Temperaturen, Strömungsgeschwindigkeit erfassen. Bleibt der betreffende Zustand konstant, bleibt auch die Energiezufuhr in der Zeit konstant. Ändert sich der zu erfassende Zustand, beispielsweise die Temperatur oder die Strömungsgeschwindigkeit, dann wird je nach Tendenz der Änderung die Zeit, in der die vorgegebene Temperaturlage erreicht wird, länger oder kürzer. Die Temperaturlage selbst oder die zugeführte Energiemenge selbst bzw. deren Änderung werden nicht gemessen, sondern eben die Änderung der Zeit.

Eine vorteilhafte Ausgestaltung der Erfindung ist im Anspruch 2 angegeben.

Damit erfolgt die Energiezufuhr zum einen in zeitlich aufeinanderfolgenden Abständen die einen Heiztakt ergeben und zum anderen auch nur über einen gewissen Zeitraum, der eine Heizzeit bestimmt Hierdurch wird der Stromverbrauch reduziert. Der weitere Vorteil des Verfahrens besteht darin, daß für die Bestimmung der chemischen und/oder physikalischen Eigenschaften, wie eingangs erläutert, nicht die Temperaturmessung entscheidend ist, sondern daß die Bestimmung über eine Zeitmessung erfolgt. Hierbei wird mit Vorteil ausgenutzt, daß in der modernen Elektronik digital arbeitende, also im Prinzip zählende Zeitmeßbausteine vorhanden sind, die sowohl als passive wie auch als aktive Elemente eingesetzt werden können. Aktives Element im Sinne der vorstehenden Erfindung ist ein derartiges Bauelement, wenn jeweils die Zeiträume vorgegeben werden, die zwischen den einzelnen Heizzeiten als Heiztakt einzuhalten sind, wie auch die Länge der jeweiligen Heizzeit selbst. Passive Anordnungen im Sinne der Erfindung sind solche, bei denen umgekehrt festgestellt wird, welche Zeit vergeht, bis eine bestimmte Temperaturlage erreicht und die festgestellte Zeit dann zur Erzeugung eines Meßsignals ausgewertet wird. Aufgrund der Relation zwischen gemessener Zeit und festgestelltem Temperaturlage lassen sich somit die unterschiedlichen Bedingungen in der zu prüfenden Gasatmosphäre feststellen, da unterschiedliche Gasatmosphären auch unterschiedliche Abhängigkeiten zwischen Temperaturverlauf und Heizzeit ergeben. Diese Abhängigkeiten lassen sich eichen, so daß hier eine zuverlässige Messung möglich ist.

In Ausgestaltung der Erfindung ist vorgesehen, daß die Beeinflussung der Wärmeabgabe der beheizbaren Oberfläche durch die Gasatmosphäre durch Messung der Intensität der von der Oberfläche ausgehenden Wärmestrahlung bestimmt wird. Bei dieser Verfahrensweise wird ausgenutzt, daß die verschiedenen Gase eine unterschiedliche Wärmeleitfähigkeit aufweisen. Damit ist es möglich., in einfacher Weise Änderungen in einer dauernd zu überwachenden Gasatmosphäre festzustellen und das Verfahren beispielsweise für Gaswarngeräte zu verwenden, die auch mit einem ständig stromdurchflossenen Heizdraht versehen sind. Damit ist es ferner möglich, reine Gase, aber auch Gasgemische zu bestimmen, also Gase zu analysieren, da für jedes Gas bei einer vorgegebenen Heizrate, d.h. bei einer vorgegebenen Energiezufuhr pro Zeiteinheit aufgrund seiner Leitfähigkeit eine bestimmte Wärmestrahlung charakteristisch ist. Die jeweils in der Zeiteinheit, d.h. also jeweils am Ende einer Heizzeit festgestellte Strahlungsintensität ist ein Maß für die Art des gemessenen Gases bzw. über die Zusammensetzung der jeweils gemessenen Gasatmosphäre, wenn diese in einer Mischung als binäres oder tertiäres System vorliegt, wie dies beispielsweise bei einer Mischung von Luft und einem weiteren Gas der Fall ist. Die Erfassung der Strahlungsintensität kann hierbei mit den verschiedensten, vorzugsweise elektrische Signale erzeugenden Mitteln erfolgen, so beispielsweise durch Fotoelemente, Fotowiderstände, Thermoelemente oder sonstige Infrarotstrahlen erfassende Elemente, Fotomultiplier, Pyrosensoren. Die einzelnen Sensorelemente können sowohl aktive Elemente sein, d.h. aufgrund der Wärmestrahlung selbst eine Spannung abgeben und damit einen Strom "erzeugen", als auch inaktiv sein, d.h. an eine externe Stromversorgung angeschlossen sein, wobei hier dann die Änderung der Spannung und/oder des Stromflusses erfaßt wird, wie dies bei Fotowiderständen der Fall ist.

Hat man es mit einem Gas konstanter Zusammensetzung zu tun, so wirken sich Änderungen seiner physikalischen Eigenschaften oder seines physikalischen Zustandes (Druck, Strömungsgeschwindigkeit, Temperatur) ebenfalls auf die von der Oberfläche abgegebene Wärmestrahlungsintensität ändernd aus.

In einer anderen Ausgestaltung des Verfahrens ist vorgesehen, daß zur Bestimmung der Eigenschaften der Gasatmosphäre die Zeit gemessen wird, in der, vom Beginn der Heizzeit ausgehend, eine vorgegebene Intensitätsschwelle der Wärmestrahlung erreicht wird. Diese Ausgestaltung stellt eine Abwandlung des vorstehenden Verfahrens dar. Wiederum wird bei vorgegebener Heizrate die Wärmestrahlung in Abhängigkeit der Wechselwirkung der Gasatmosphäre mit der sich aufheizenden Oberfläche erfaßt. Hier wird aber nicht die Intensität der Wärmestrahlung nach einem vorgegebenen Zeitraum gemessen, sondern es wird eine Intensitätsschwelle vorgegeben und festgestellt, nach welcher Zeit bei vorgegebener Heizrate die Intensitätsschwelle überschritten wird und damit ein entsprechendes Signal ausgelöst wird. Beispielsweise bei Gasen mit hoher Leitfähigkeit oder bei hoher Strömungsgeschwindigkeit wird diese Intensitätsschwelle wegen der starken Wärmeabgabe der Oberfläche nach längerer Zeit und bei Gasen mit schlechter Leitfähigkeit wegen der geringen Wärmeabgabe der Oberfläche die Intensitätsschwelle nach kürzerer Zeit überschritten. Bei Gasmischungen, die sowohl aus Gasen mit geringer Leitfähigkeit als auch aus Gasen mit hoher Leitfähigkeit zusammengesetzt sind, liegt dann die Überschreitung der Intensitätsschwelle entsprechend dem Mischungsverhältnis zwischen den beiden Eckwerten, welche über entsprechende, durch Eichmessungen aufgestellte Tabellen feststellbar sind.

In einer weiteren Ausgestaltung des erfindungsgemäßen Verfahrens ist vorgesehen, daß die von der Gasatmosphäre beeinflußte Wärmeabgabe bei einer elektrisch beheizbaren Oberfläche durch Messung des im jeweiligen Zeitraum für die Aufheizung der Oberfläche (Heizzeit) benötigten elektrischen Stromes bei vorgegebener Spannung bestimmt wird. Während bei der Erfassung der Strahlungsintensität als zusätzliches Element ein entsprechendes Sensorelement vorhanden sein muß, wird bei dieser Verfahrensweise die Wärmeabgabe in Relation zur Heizzeit erfaßt. Hier kann wiederum in der Weise vorgegangen werden, daß entweder die in einer vorgegebenen Zeit erreichte maximale Stromstärke gemessen wird oder aber, wiederum bei einer vorgegebenen Stromstärke (Stromschwelle) die Zeit gemessen wird, die bei vorgegebener Spannung benötigt wird, um diesen Schwellenwert zu erreichen. Sowohl die maximale Stromstärke bei vorgegebener Aufheizzeit als auch die gemessene Zeit bis zum Erreichen einer vorgegebenen Stromschwelle sind ein Maß für Zusammensetzung, Eigenschaft oder Zustand für des jeweils mit der beheizbaren Oberfläche in Berührung stehenden Gases bzw. Gasgemisches. Bei dieser Verfahrensweise ist bevorzugt die beheizbare Oberfläche selbst elektrisch leitend, beispielsweise in Form eines Halbleiters oder eines metallischen Leiters, so daß durch Anlegen einer Spannung über die Stromwärme die Oberfläche direkt aufgeheizt wird. Befindet sich eine derart direkt beheizbare Oberfläche statt in einer ruhenden Gasatmosphäre in einer vorgegebenen, aber bewegten Gasatmosphäre, beispielsweise in einem Strömungskanal, dann ist die im jeweiligen Heiztakt gemessene maximale Stromstärke bzw. Zeit bis zum Erreichen der vorgegebenen Stromschwelle ein Maß für die Strömungsgeschwindigkeit des Gases im Strömungskanal.

Das vorstehend beschriebene Verfahren unter Verwendung einer direkt beheizten Oberfläche und der Messung des Heizstromes in der Heizzeit, sei es durch Vorgabe der Zeit und Messung des Stromes, sei es durch Vorgabe einer Stromschwelle und Messung der Zeit, läßt sich mit Vorteil auch für die Kontrolle einer Gasatmosphäre in bezug auf reaktive Gase einsetzen. Auch hier wird dann die beheizbare Oberfläche auf die Zündtemperatur des in der vorhandenen Gasatmosphäre als zusätzlich auftretender Anteil festzustellenden Gase eingestellt. Ist ein entsprechendes reaktives Gas in einem entsprechenden in bezug auf die vorhandene Gasatmosphäre reaktionsfähigen Mengenanteil vorhanden, dann führt eine exotherme Gasreaktion zu einer Erhöhung der Temperatur der beheizbaren Oberfläche, und eine endotherme Gasreaktion zu einer Verminderung der Oberflächentemperatur, die unabhängig von der Stromzufuhr ist, so daß die sich hieraus ergebende Abweichung der Relation zwischen Stromstärke und Zeit als Meßsignal ausgewertet werden kann.

In Ausgestaltung des Verfahrens ist hierbei ferner vorgesehen, daß die beheizbare Oberfläche nach dem Abschalten der Energiezufuhr in der voraufgegangenen Heizzeit jeweils nach Erreichen einer unteren Mindesttemperaturlage wieder aufgeheizt wird. Hierdurch ist es insbesondere für die Feststellung reaktiver Gase möglich, die beheizbare Oberfläche auf einer Mindesttemperatur zu halten und jeweils ausgehend von dieser Mindesttemperatur die Temperatur auf die erforderliche Reaktionstemperatur periodisch aufzuheizen. Damit ist es möglich, zu einer nahezu verzögerungsfreien Anzeige zu gelangen, wenn bei Vorhandensein eines reakiven Gasgemisches die Reaktion ausgelöst wird.

In Ausgestaltung des erfindungsgemäßen Verfahrens ist es möglich, die die zeitliche Folge der aufeinanderfolgenden Heizzeiten als Heiztakt fest vorzugeben. Eine derartige Vorgabe ist beispielsweise dann zulässig, wenn aufgrund der Gegebenheiten nur ein langsames Zuströmen der festzustellenden Gasart zu erwarten ist und darüber hinaus erst bei größeren Mengenanteilen Gefahren zu erwarten sind.

In einer anderen Ausgestaltung des erfindungsgemäßen Verfahrens ist vorgesehen, daß der Beginn einer Heizzeit durch eine vorgegebene untere Temperaturschwelle und das Ende einer Heizzeit durch eine vorgegebene obere Temperaturschwelle bestimmt ist und daß die zeitliche Folge der Heizzeiten als Heiztakt (Frequenz) als Meßsignal zur Bestimmung der Gasatmosphäre dient. Diese Ausgestaltung des Verfahrens hat den Vorteil, daß Veränderungen praktisch selbsttätig erfaßbar sind, wobei schon geringe Veränderungen unmittelbar eine Änderung der Frequenz der Heizzeiten bewirken. Während die vorstehend beschriebenen Verfahrensweisen eine Messung der Zeit (bzw. Zählung von Impulsen in der Zeiteinheit) und die Messung eines Stromes, also die Erfassung zweier Meßwerte erfordern, wobei beide Meßwerte wiederum in Relation zueinander zu setzen sind, hat die zuletzt genannte Ausgestaltung des Verfahrens den Vorteil, daß eine untere und eine obere Schwelle für den aufzuwendenden Heizstrom oder eine untere und eine obere Intensitätsschwelle für die von der Oberfläche ausgehende Wärmestrahlung. vorgegeben wird, daß aber die Messung selbst als reine Zeit- bzw. Impulsmessung erfolgt. So läßt sich beispielsweise dieses Verfahren zur Überwachung von vorhandenen Gasatmosphären einsetzen, bei denen das Eintreten von leicht reaktiven Gasen, insbesondere Gasen, die schon in geringen Mengen mit der vorhandenen Gasatmosphäre, beispielsweise der Raumluft reagieren, festzustellen sind. Die Anwesenheit des reaktiven Gases wird unmittelbar durch eine Veränderung der Frequenz der Heizzeiten angezeigt, da die obere Temperaturschwelle schneller erreicht wird, die Stromzufuhr abgeschaltet wird und nach erfolgter Abkühlung auf den Bereich der Reaktionstemperatur der Heizstrom wieder eingeschaltet wird und hierbei eine erneute Reaktion ausgelöst und wiederum sehr schnell die obere Temperaturschwelle erreicht wird. Die gibt in gleicher Weise auch bei Änderungen des physikalischen Zustandes (Strömungsgeschwindigkeit, Druck Temperatur) eine gasatmosphäre. Es ergeben sich für das erfindungsgemäße Verfahren eine Reihe von weiteren technischen Anwendungsmöglichkeiten. So ist es neben der erwähnten Bestimmung des Vorhandenseins bestimmter Gase beispielsweise auch möglich, Feuchtebestimmungen in Gasen vorzunehmen, oder über eine Crackung und Bestimmung der Zersetzungsprodukte gasförmige Verbindungen überhaupt erkennbar zu machen. Neben der Bestimmung chemischer Eigenschaften lassen sich mit Hilfe dieses Verfahrens auch Druckmessungen im Vakuumbereich und Messungen von Gasströmungen durchführen. Bei entsprechender Ausgestaltung der beheizbaren Oberfläche können neben thermokatalytischen Vergängen auch Sorptions- und Adsorptionsvorgänge an einer entsprechend ausgebildeten Oberfläche für entsprechende Einsatzfälle ausgenutzt werden. In allen Fällen bietet das erfindungsgemäße Verfahren, insbesondere in seinen jeweiligen Ausgestaltungen, weite Einsatzmöglichkeiten.

Das erfindungsgemäße Verfahren wird anhand von schematischen Zeichnungen und Diagrammen für Ausführungsbeispiele näher erläutert. Es zeigen:
- Fig. 1: eine Prinzipskizze für eine erste Ausführungsform des Verfahrens,
- Fig. 2: eine Prinzipskizze für eine zweite Ausführungsform des Verfahrens,
- Fig. 3: ein Blockschaltbild der ersten Ausführungsform für eine Einrichtung gem. Fig 1 zur Durchführung des Verfahrens,
- Fig. 4: ein Diagramm zur Erläuterung der Betriebsweise der Einrichtung gem. Fig. 3 in einer ersten Verfahrensweise,
- Fig. 5: ein Diagramm zur Erläuterung der Betriebsweise der Einrichtung gem. Fig. 3 in einer zweiten Verfahrensweise,
- Fig. 6: ein Blockschaltbild der zweiten Ausführungsform einer Einrichtung gem. Fig. 2 zur Durchführung des Verfahrens,
- Fig. 7: ein Diagramm zur Erläuterung einer ersten Betriebsweise der Einrichtung gem. Fig.6,
- Fig. 8: ein Diagramm zur Erläuterung einer zweiten Betriebsweise der Einrichtung gem. Fig. 6,
- Fig. 9: die konstruktive Gestaltung einer Meßzelle für eine Anordnung gem. Fig. 6,
- Fig. 10: ein Meßdiagramm für ein Argon-Luft-Gemisch,
- Fig. 11: ein Meßdiagramm für ein Propan-Luft-Gemisch,
- Fig. 12: eine Oszillographen-Darstellung des Verfahrens gem. Fig. 6 für unterschiedliche Gas-Luft-Mischungen,
- Fig. 13: ein Frequenz-Meßdiagramm für eine Methan-Luft-Gemisch, gemessen nach dem Verfahren gem. Fig. 6 und Fig. 8,
- Fig. 14: eine Ausführungsform zur Anwendung des Verfahrens zur Gas-Durchflußmessung,
- Fig. 15: ein Durchflußmeßdiagramm,
- Fig. 16: eine Ausführungsform zur Anwendung des Verfahrens zur Bestimmung des Sauerstoffgehaltes einer Gas-Mischung,
- Fig. 17: ein Meßdiagramm einer Bestimmung des Sauerstoffgehaltes,
- Fig. 18: eine Kombinationsanordnung zur Bestimmung brennbarer Anteile und des Sauerstoffanteils in einer Gasatmosphäre,
- Fig. 19: eine Ausführungsform zur Bestimmung der Feuchte in Gasen mittels einer sorptionsaktiven beheizbaren Oberfläche,
- Fig. 20: eine Ausführungsform zur Vakuum(Druck)-Bestimmung,
- Fig. 21: ein Druckmeßdiagramm,
- Fig. 22: eine Ausführungsform zur Gasbestimmung über eine Crackung an der beheizbaren Oberfläche,
- Fig. 23: ein Meßdiagramm zum Nachweis eines Fluor-Chlor-Kohlenwasserstoffs,
- Fig. 24: ein Blockschaltbild einer Dauerüberwachungseinrichtung.

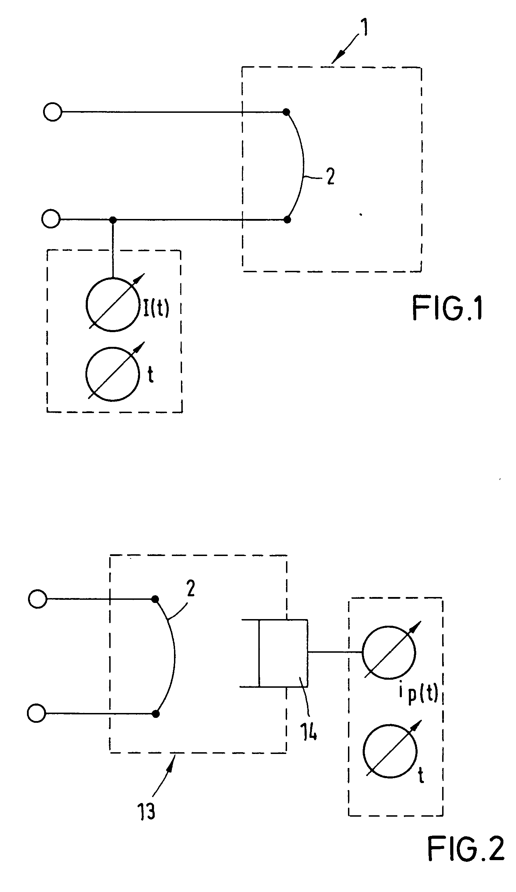

In Fig. 1 ist schematisch das Meßprinzip dargestellt. In einer Meßzelle 1, die ein Meßgas A enthält oder von dem Meßgas A durchströmt wird, ist eine direkt elektrisch beheizbare Oberfläche 2 in Form eines Heizdrahtes angeordnet. Über entsprechende Zuleitungen liegt dieser Heizdraht an einer hier nicht näher dargestellten Spannungsquelle an. Die für die Beheizung der Oberfläche benötigte Stromstärke I wird, wie Schematisch dargestellt, in Abhängigkeit von der Zeit gemessen, wobei die Zeit bis zum Erreichen einer vorgelegten Schwelle bzw. zwischen vorgelegten Schwellen des Heizstromes je nach Einsatzfall beim Aufheizen oder beim Abkühlen der Oberfläche gemessen wird.

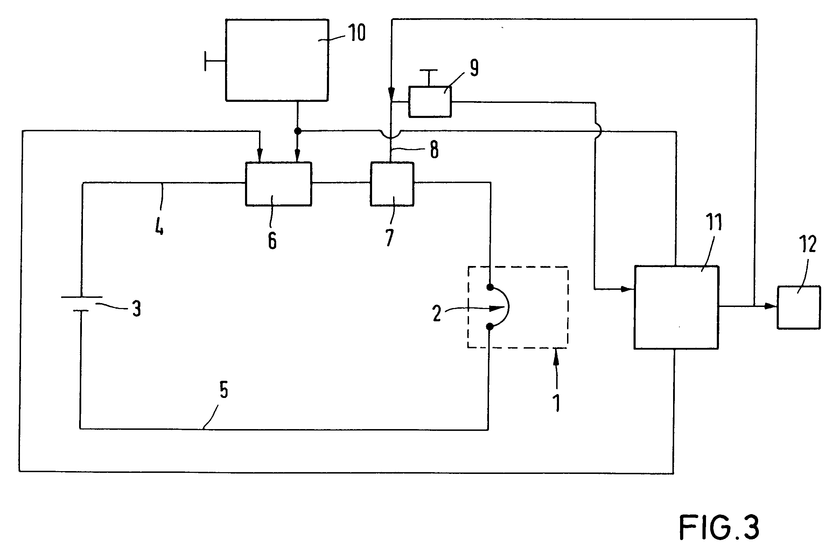

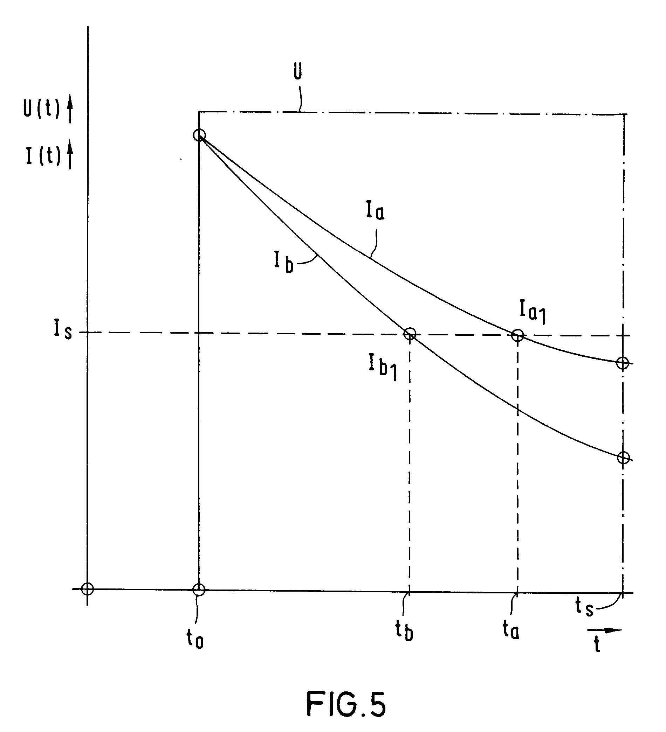

Fig. 2 zeigt eine Abwandlung des Verfahrens gem. Fig. 1. Hier ist in einer Meßzelle 13, die ein Meßgas A enthält, wiederum eine elektrisch beheizbare Oberfläche 2 angeordnet. Während bei dem in Fig. 1 dargestellten Prinzip die durch die zu bestimmende Gasatmosphäre beeinflußte Wärmeabgabe der Oberfläche 2 unmittelbar über die Veränderung des Heizstromes im Verhältnis zur Zeit erfaßt wurde, wird bei dem in Fig. 2 dargestellten Meßprinzip die Emission einer elektromagnetischen Strahlung beim Aufheizen oder beim Abkühlen der Oberfläche 2 erfaßt. Hierzu ist ein Strahlungssensor 14 vorgesehen, über den wiederum, wie schematische dargestellt, die Veränderung der elektromagnetischen Strahlung iₚ in Abhängigkeit von der Zeit erfaßt werden kann. Auch hier wiederum wird die Zeit gemessen, bis eine vorgelegte Schwelle der Emission der elektromagnetischen Strahlung beim Aufheizen oder Abkühlen der Oberfläche erreicht wird bzw. jeweils eine untere und eine obere vorgegebene Schwelle für den Emissionswert erreicht wird. In einer Abwandlung kann dieses System auch mit konstanter Energiezufuhr eingesetzt werden, wenn beispielsweise für Gaswarngeräte, die für ein bestimmtes Gas festgelegt sind, die im Warnfall auftretende Änderung der Strahlungsintensität, die durch den Strahlungssensor erfaßt wird, ein Meß- bzw. Alarmsignal auslöst. Die anhand der Fig. 1 und 2 schematisch dargestellten unterschiedlichen Meßanordnungen werden anhand der Blockschaltbilder gem. Fig. 3 und Fig. 5 nachstehend im einzelnen näher erläutert.

Fig. 3 stellt in Form eines Blockschaltbildes eine Einrichtung nach Fig. 1 dar und besteht im wesentlichen aus der Meßzelle 1 mit wenigstens einer Öffnung für Eintritt und Austritt der zu messenden Gasatmosphäre. Die Meßzelle 1 ist insbesondere für die Verwendung zur Feststellung reaktiver Gase anstelle großer Durchtrittsöffnungen mit einer Vielzahl kleiner Durchtrittsöffnungen in den Zellenwandungen versehen. Die Meßzelle kann hier beispielsweise durch einen Hohlkörper aus einem porösen Sinterwerkstoff bestehen.

In der Meßzelle 1 ist die elektrisch beheizbare Oberfläche 2 angeordnet, die vorzugsweise direkt elektrisch beheizbar ausgebildet ist und beispielsweise die Form eines Heizdrahtes aufweisen kann. Das zu verwendende Material für die beheizbare Oberfläche richtet sich jeweils nach dem Einsatzfall und kann beispielsweise aus einem katalytisch aktiven Material hergestellt sein. Je nach Anwendungsfall kann die Oberfläche auch chemisch-physikalisch für Sorptions-Wechselwirkungen des Gases mit der Oberfläche aktiviert sein. Die beheizbare Oberfläche wird über eine Stromquelle 3, zum Beispiel in Form eines aufladbaren Akkus mit elektrischer Energie über die Leitungen 4, 5 versorgt. In der Leitung 4 ist eine Schalteinrichtung 6 angeordnet, mit der die Stromversorgung an- und wieder ausgeschaltet werden kann. Über eine Meßeinrichtung 7 in der Leitung 4 kann die jeweils für die Beheizung der Oberfläche 2 benötigte Stromstärke gemessen werden, wobei die Meßeinrichtung 7 einen Signalausgang 8 aufweist, in dem ein Schwellenwerteinsteller 9 angeordnet ist, mit dem erreicht werden kann, daß erst dann ein Signal abgegeben wird, wenn eine bestimmte vorgegebene Schwelle für die Stromstärke überschritten wird.

Die Schalteinrichtung 6 ist mit einem Zeitgeber 10 verbunden, durch den in vorgebbaren Zeitintervallen über die Schalteinrichtung 6 die Stromversorgung zur Aufheizung der Oberfläche 2 eingeschaltet wird.

Sowohl der Zeitgeber 10 als auch die Meßeinrichtung zur Erfassung der Stromstärke mit ihrem Schwellenwertsteller 9 sind auf eine Zeitmessung 11, beispielsweise in Form eines Impulszählers aufgeschaltet, die mit einer Meßauswertung 12 zur Darstellung des Meßergebnisses versehen ist. Die Zeitmessung erfaßt somit innerhalb des Einschaltintervalls die vom Zeitgeber 10 mit konstanter Frequenz abgegebenen Impulse. Diese Meßauswertung 12 kann in Form einer Anzeigeeinrichtung und/oder einer akustischen und/oder optischen Signaleinrichtung ausgebildet sein und/oder Teil eines Regel- oder Steuerkreises sein, mit dem beispielsweise bei Auslösung eines Gasalarms Sicherheitstore geschlossen werden, Ventilatoren angeschaltet werden oder dergl..

Das erfindungsgemäße Verfahren wird nun für unterschiedliche Einsatzfälle für eine Einrichtung gemäß Fig. 3 nachstehend anhand von Diagrammen näher erläutert.

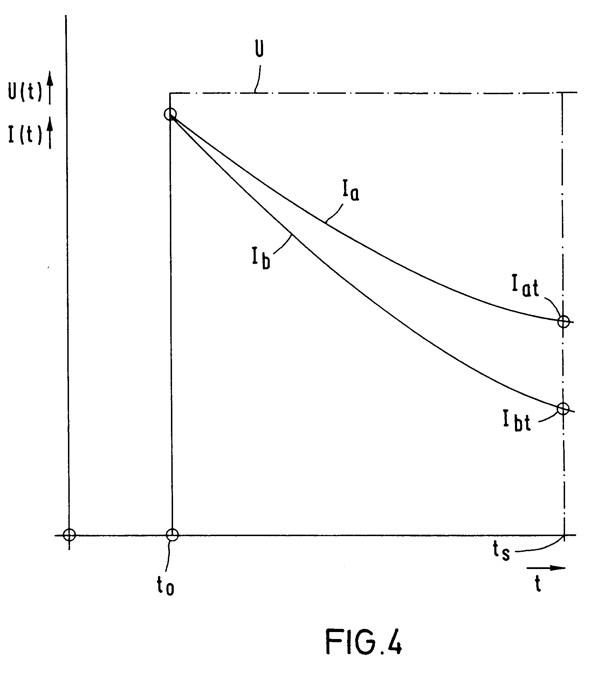

Wenn die Meßzelle 1 eine zu prüfende Gasatmosphäre enthält, dann wird über den Zeitgeber 10 mit Hilfe der Schalteinrichtung 6 die beispielsweise in Form eines Heizdrahtes ausgebildete beheizbare Oberfläche 2 an die Batteriespannung angelegt. Nach einer über die Zeitmessung 11 vorgegebenen Zeit wird dann die Schalteinrichtung wieder betätigt und die Stromzufuhr abgeschaltet. Zu Zwecken der Überwachung wird dieser Vorgang dann in zeitlichen Abständen immer wieder aufeinanderfolgend wiederholt. Für diese Heizzeit ist in Fig. 4 der Verlauf der Spannung U über der Zeit t schematisch in Form eines Rechteckverlaufs dargestellt. Verwendet man für die beheizbare Oberfläche 2 einen Heizdraht aus elektrisch leitendem Material, für das der elektrische Widerstand in Abhängigkeit von der Temperatur bekannt ist, beispielsweise ein Material, bei dem in den hier infrage kommenden Temperaturbereichen zwischen beispielsweise 20°C und 700°C der Widerstand ansteigt, dann ergibt sich beim Vorhandensein einer bestimmten Gasatmosphäre in der Meßzelle 1 ein Verlauf der Stromstärke I wie er durch die Kurve Iₐ wiedergegeben ist. Nach Ablauf der durch den Zeitgeber vorgegebenen Heizzeit zur Zeit tₛ wird der Strom Iₐₜ als Meßwert festgehalten. Handelt es sich hierbei um eine vorgegebene "Normalatmosphäre", beispielsweise Luft, so wird kein Signal ausgelöst.

Sobald jedoch in der vorhandenen Normalatmosphäre zusätzlich ein weiteres Gas, beispielsweise ein reaktives Gas wie Methan oder dergl. enthalten ist, dann wird unter dem Einfluß der Temperatur der Oberfläche die Reakion zwischen dem Methan und dem Luftsauerstoff ausgelöst, was zu einem weiteren Temperaturanstieg in der Meßzelle führt. Dieser weitere Temperaturanstieg bewirkt, daß aufgrund der Erhöhung des elektrischen Widerstandes des die Oberfläche 2 verkörpernden Heizdrahtes während der Heizzeit, also in dem Intervall t₀ - tₛ, sich die Stromaufnahme reduziert, so daß sich der in Fig. 4 schematisch wiedergegebene Verlauf I_{b} ergibt. Mit Ablauf des Heizzeit t₀ - tₛ wird dann die sehr viel niedrigere Stromstärke I_{bt} als Meßsignal erfaßt. Durch eine entsprechende Vorgabe eines Schwellenwertes der Strommeßeinrichtung 7 kann dann über die Meßauswertung 12 ein entsprechendes Schaltsignal für einen Alarm etc. abgegeben werden.

Die vorstehend beschriebene Verfahrensweise kann dann in der Weise abgewandelt werden, daß, wie in Fig. 5 angegeben, für den Verlauf der Stromstärke über der Zeit ein Schwellenwert Iₛ für die Stromstärke vorgegeben wird.. Die Schaltung gem. Fig. 3 ist nun so ausgelegt, daß der Zeitpunkt gemessen wird, zu dem der Heizstrom den Schwellenwert Iₐ₁ erreicht. Die Zeitspanne t₀ - tₐ ist dann das "Maß" für das Vorhandensein der vorgegebenen "Normalatmosphäre". Wenn nun entsprechend dem vorstehend angegebenen Anwendungsfall zusätzlich zu der die Normalatmosphäre bildenden Luft in der zu messenden Gasatmosphäre Methan enthalten ist, führt die Reaktion des Methangases mit dem Luftsauerstoff zu einem spürbaren Abfall in der Stromaufnahme, so daß der vorgegebene Schwel lenwert Iₛ bereits zu einem früheren Zeitpunkt t_{b} erreicht wird, so daß also der sehr viel kürzere Zeitraum t₀ - t_{b} ein Maß für eine Störung der Normalatmosphäre durch das vorhandene reaktive Gas ist und zwar in einer gefährlichen Konzentration, so daß hier wiederum, wie vorstehend angegeben, über die Meßauswertung 12 die entsprechenden Schaltimpulse abgegeben werden.

Aus den beiden vorstehenden Beispielen ergibt sich, daß das erfindungsgemäße Verfahren nicht mehr allein über die der Temperatur proportionale Stromaufnahme der Heizoberfläche arbeitet, sondern hier zusätzlich eine Zeitmessung mit einbezieht. Durch entsprechende Vorgaben der Relation zwischen Strom und Zeit sowie durch entsprechende Vorgaben der Schwellenwerte für Zeit oder Strom lassen sich dann mit ein und demselben Meßgerät unterschiedliche Meßbereiche vorgeben. Während bei der anhand von Fig. 4 beschriebenen Betriebsweise die Signalauslösung noch über eine Strommessung erfolgt, also der Zeitgeber lediglich die Dauer der einzelnen Heizzeit und den zeitlichen Abstand (Heiztakt) der aufeinanderfolgenden Heizzeiten bestimmt, wird bei der anhand von Fig. 5 beschriebenen Betriebsweise die Messung ausschließlich über eine Zeitmessung vorgenommen. Die als Schwellenwert vorzugebende Stromstärke kann je nach Art des Verwendungszweckes einer derartigen Einrichtung fest vorgegeben werden, so daß hier keine komplizierten Strommeßgeräte vorzusehen sind. Die Erläuterung der Betriebsweise läßt ferner erkennen, daß das Meßverfahren sehr empfindlich ist und mit nur geringer Zeitverzögerung bereits zu einer Signalauslösung führt. Es ist nach vorhergehender Eichung möglich, über die Strommessung und den Stromwert Iₜ oder über eine Zeitmessung bei vorgegebener Stromschwelle über den jeweiligen Zeitraum tₒ - tₓ, in dem die vorgegebene Schwelle unterschritten wird, Gase oder Gasmischungen zu bestimmen.

Die in den Fig. 4 und 5 wiedergegebenen schematischen Kurven des Verlaufs der Stromstärke über der Zeit, die die Temperaturverhältnisse an der elektrisch beheizten Oberfläche 2 wiedergeben, zeigen ferner auch die Einsatzmöglichkeit des Verfahrens zur Messung der Strömungsgeschwindigkeit eines Gasstromes. Bei diesem Einsatzfall ist die Meßzelle 1 nicht mehr ein abgeschlossener Raum sondern der Teil eines Strömungskanals, in den die beheizbare Oberfläche 2 beispielsweise in Form eines Heizdrahtes, eines Wendels oder dergl., hineinragt. Da es sich bei einer strömenden Gasatmosphäre in der Regel um eine Gasatmosphäre mit konstanter Zusammensetzung handelt, kann nun über die jeweils in der Zeiteinheit von dem vorbeiströmenden Gas von der Oberfläche abgenommene Wärmemenge und der dadurch bewirkten Temperaturabsenkung innerhalb der Heizzeit eine Aussage über die Strömungsgeschwindigkeit des Gases im Strömungskanal mit diesem Meßverfahren getroffen werden. Der Vorteil ist hierbei, daß die Strömung im Kanal durch einen dünnen Glühdraht kaum beeinträchtigt wird, so daß hier der Glühdraht im ungestörten Kernbereich der Strömung angeordnet sein kann. Hierbei ist ferner zu berücksichtigen, daß über die vorgegebene Heizspannung die jeweils erzielbare Maximaltemperatur an der beheizbaren Oberfläche variiert werden kann. So ist es beispielsweise möglich, auch beim Vorhandensein reaktiver Gase in einem Temperaturbereich unterhalb der Reaktionstemperatur zu arbeiten, da die Veränderung der Wärmeaufnahmefähigkeit der Gasatmosphäre bei Abweichung der Zusammensetzung von der zugrundeliegenden "Normalatmosphäre" sich ebenfalls durch eine Änderung im Verlauf des Heizstromes bemerkbar macht.

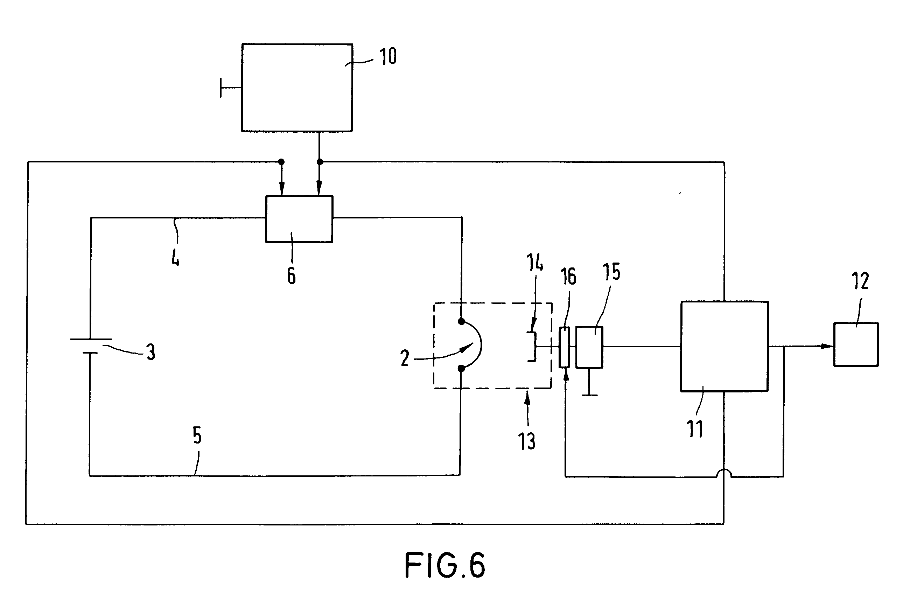

In Fig. 6 ist eine Einrichtung gem. Fig. 2 als Schaltungsanordnung in Form eines Blockschaltbildes wiedergegeben. Bei dieser Anordnung ist die Meßzelle 13 vorgesehen, in der eine direkt oder indirekt beispielsweise elektrisch beheizbare Oberfläche 2 angeordnet ist. Dieser Oberfläche 2 ist ein Strahlungssensor 14 zugeordnet, der mit seiner Erfassungsfläche gegen die Oberfläche 2 gerichtet ist. Der Strahlungssensor 14 kann als Fotowiderstand, Fotodiode, Fotoelement, auch als Infrarotmeßgerät, als pyroelektrischer Sensor oder auch als Bolometer ausgebildet sein. Der Signalausgang ip des Strahlungssensors 14 ist auf einen Steller 15 aufgeschaltet, mit dem unterschiedliche Meßsignalschwellen einstellbar sind. Der Signalausgang des Stellers 15 ist wiederum auf eine Zeitmessung 11 der vorstehend bereits erläuterten Form aufgeschaltet, die ihrerseits mit der Meßauswertung 12 verbunden ist.

Die beheizbare Oberfläche 2 ist wiederum über Zuleitungen 4 und 5 an eine Stromversorgung 3 angeschlossen, wobei wiederum in der Zuleitung 4 eine Schalteinrichtung 6 angeordnet ist, die mit dem Zeitgeber 10 in gleicher Funktion verbunden ist, wie dies bereits anhand von Fig. 3 erläutert wurde. Die Zeitmessung 11 ist mit dem Zeitgeber 10 über einen Startschalter 16 verbunden, so daß jeweils der Start der Zeitmessung eingeschaltet werden kann.

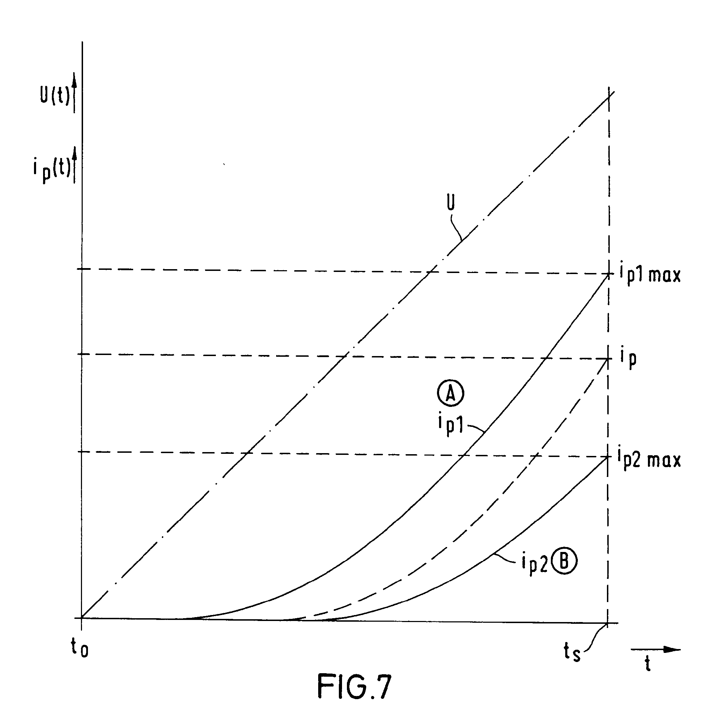

Die Schalteinrichtung 6 ist bei dieser Meßeinrichtung so ausgebildet, daß die Heizeinrichtung bei einem elektrisch direkt beheizten Draht nicht in voller Höhe zu Beginn des Einschaltzeitpunktes anliegt sondern mit der Zeit auf einen Maximalwert ansteigend erhöht wird. Im Diagramm gem. Fig. 7 ist hier ein linearer Spannungsanstieg U als Beispiel angegeben. Mit Erreichen der vorgegebenen Zeitschwelle tₛ ist die vorgegebene Heizzeit beendet und die Spannung wird abgeschaltet. Dieser Vorgang wiederholt sich dann in vorgegebenen Abständen.

Über den Strahlungssensor 14 wird dann die von der in der Meßzelle 2 enthaltene Gasatmosphäre durchgelassene Strahlungsintensität erfaßt. Für ein Gas A ergibt sich damit ein Verlauf der Intensität iₚ₁. Für ein Gas B mit einer höheren Leitfähigkeit als das Gas A ergibt sich damit der Verlauf der festgestellten Strahlungsintensität gemäß der Kurve iₚ₂. Der jeweils zum Zeitpunkt tₛ festgestellte maximale Intensitätswert i_{p1 max.} bzw. i_{p2 max.} läßt damit eine Aussage nach entsprechender Eichung über das Vorhandensein eines bestimmten Gases zu. Nimmt man an, daß die wiedergegebenen Kurven iₚ₁ und iₚ₂ dem Verlauf des jeweils reinen Gases entsprechen, dann lassen sich auch Gasmischungen aus Gas A und Gas B erfassen, da dann der Verlauf der Strahlungsintensität über der Zeit sich entsprechend dem Mischungsverhältnis zwischen Gas A und Gas B zwischen iₚ₁ und iₚ₂ ergibt. Anstelle eines reinen Gases kann beispielsweise die Kurve iₚ₁ auch durch eine Gasmischung, beispielsweise Luft, vorgegeben werden, so daß dann mit Anwesenheit eines weiteren Gases in der Luft zu einer entsprechenden Verschiebung der Intensitätskurve führt.

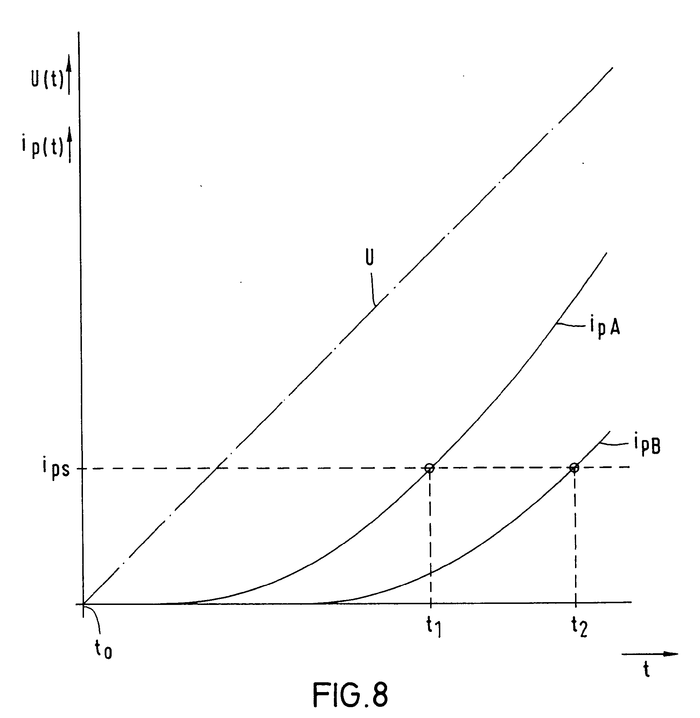

Auch bei dieser Verfahrensweise läßt sich die Messung wieder als reine Zeitmessung ausführen, wie dies aus Fig. 8 ersichtlich ist. Bei dieser Verfahrensweise wird wiederum mit einem vorgegebenen Anstieg der Heizspannung gearbeitet. Im Strahlungssensor 14 wird über den Steller 15 eine Intensitätsschwelle vorgegeben, so daß erst dann ein Signal ausgelöst wird, wenn die vorgegebene Strahlungsintensitätsschwelle überschritten wird. Wie Fig. 8 zeigt, wird bei einem Gas mit niedrigerer Leitfähigkeit die Intensitätsschwelle früher, d.h. zum Zeitpunkt t₁ überschritten, während bei einem Gas mit größerer Leifähigkeit die Schwelle erst zu einem späteren Zeitpunkt t₂ überschritten wird.

Die vorstehend für zwei unterschiedliche Meßeinrichtungen beschriebenen Betriebsweisen zeigen, daß bei dem vorliegenden Verfahren immer die zeitliche Änderung von Strahlungsemission und/oder Wärmeleitfähigkeit der Oberfläche beim Aufwärmen bzw. beim Abkühlen erfaßt wird. Da in das Meßverfahren der Faktor "Zeit" mit einbezogen wird, erhält man so ein dynamisches Meßverfahren, das mit großer Empfindlichkeit, Selektivität und kurzer Ansprechzeit die Bestimmung von Leitfähigkeit, Zusammensetzung oder Geschwindigkeit des Gases oder einer Gasatmosphäre erlaubt. Da bei dem Meßverfahren mit Hilfe der Meßeinrichtung nach Fig. 6 die physikalischen Verhältnisse in einem Raum gemessen werden, läßt sich neben der vorstehend angegebenen Messung von Zusammensetzung und Leitfähigkeit auch ein Unterdruck von Gasen bzw. Gasgemischen in dem betreffenden Raum bestimmen, da sich die Wärmeleitfähigkeit eines vorgegebenen Gases druckabhängig ändert. Je nach Art der zu untersuchenden Gasatmosphäre kann das Meßverfahren durch Erfassung der Strahlungsintensität auch in der Weise variiert werden, daß für die Analyse der Abkühlungsvorgang und damit die abnehmende Strahlungsemission der zuvor erwärmten Oberfläche in Abhängigkeit von der Zeit erfaßt werden. Während bei den zuvor beschriebenen Verfahren Heizzeit und Meßzeit synchron verlaufen, muß bei einer Analyse über die abnehmende Strahlungsemission Heizzeit und Meßzeit nacheinander erfolgen.

Wie vorstehend bereits an dem Ausführungsbeispiel eines reaktiven Systems Gas/Luft erläutert, wird der jeweilige Verlauf der Strahlungsintensität oder des Heizstromes durch exotherme oder endotherme Reaktionen zwischen einzelnen Gasen einer gemischten Gasatmosphäre erfaßt. Dies kann bei entsprechender Auslegung der beheizbaren Oberfläche katalytisch beschleunigt werden. Absorptionsvorgänge und Desorptionsvorgänge führen jeweils zu entsprechenden Veränderungen im zeitlichen Verlauf der erfaßten Strahlungsintensität bzw. des erfaßten Heizstromes.

Das Verfahren läßt verschiedene Variationen zu. So kann die beheizbare Oberfläche katalytisch aktiv oder inaktiv sein, absorbierend oder nicht absorbierend sein. Die Heizrate kann, wie vorstehend bereits erläutert, variiert werden. Bei einer schnellen Steigerung der Heizrate, ggf. auch bei katalytisch aktiven Oberflächen können selbst reaktive Gasgemische nur durch Erfassung ihrer Wärmeleitfähigkeit bestimmt werden. Bei einer langsamen Steigerung der Heizrate wird zusätzlich zur Leitfähigkeit auch die katalytische Reaktion mit erfaßt. Durch eine entsprechende Auswahl der beheizbaren Oberfläche und bei entsprechender Energiezufuhr kann die Oberflächentemperatur so weit geführt werden, daß bei entsprechenden Gasgemischen die Cracktemperatur erreicht wird. Die beim Erreichen der Cracktemperatur ablaufenden chemischen Vorgänge führen ebenfalls zu einer erfaßbaren Beeinflussung der Strahlungsintensität und/oder der Heizstromstärke.

Die Auswertung der Meßsignale kann bei der gegebenen elektronischen Technik über Mikroprozessoren erfolgen, so daß hier eine Vielzahl von Daten auch mit einem kleinen Gerät erfaßt werden können, so daß es möglich ist, handliche Geräte in Zigarettenschachtelgröße auch als Multifunktionsgeräte mit geringem Stromverbrauch herzustellen. Aus dem Vorstehenden ergibt sich ferner, daß das Verfahren nicht nur auf die Bestimmung von Gasen und Gasgemischen sondern auch auf die Bestimmung von Mischungen von Dämpfen und Dämpfen mit Gasen und Gasgemischen anwendbar ist.

Nachstehend werden auch Abwandlungen hinsichtlich der Konstruktion und der Verfahrensweise im einzelnen erläutert.

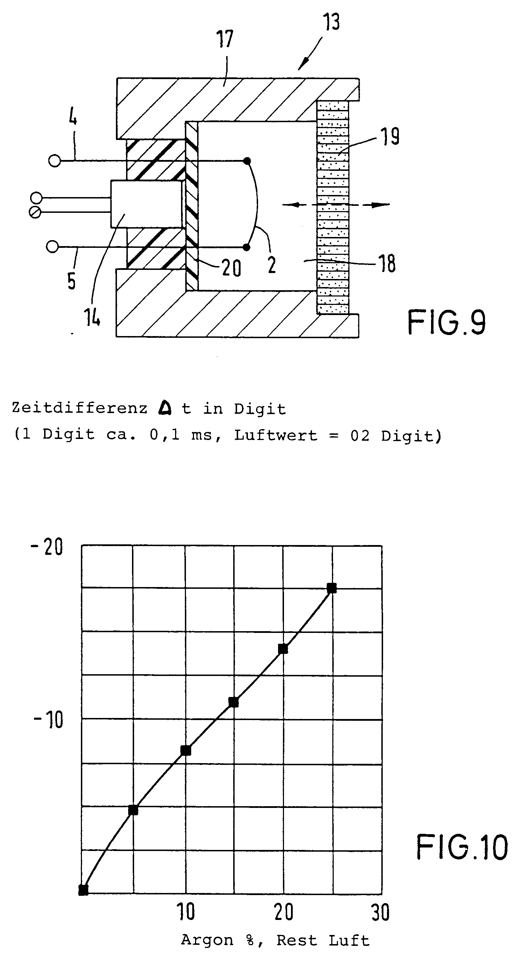

Fig. 9 zeigt eine konstruktive Ausgestaltung der Meßzelle 13. In dieser Bauform wird von einem Gehäuse 17 ein Meßraum 18 zur Aufnahme des Meßgases umschlossen, der an einer Seite einen Gasdurchlaß 19 aufweist, der beispielsweise durch eine Platte aus porösem Sintermetall als Konvektions- und Flammensperre dient. Der Gasaustausch erfolgt hier durch Diffusion. Im Meßraum ist eine elektrisch beheizbare Oberfläche 2, beispielsweise in Form eines Drahtes angeordnet, wobei der Meßraum auf der dem Gasdurchlaß abgekehrten Seite von einer Platte 20 aus einem Material abgeschlossen ist, das durchlässig für Infrarotstrahlen ist. Auf der Rückseite der IRdurchlässigen Platte 20 ist ein IR-Strahlungssensor 14 angeordnet. Die Zu- und Ableitungen 4, 5 für den Heizdraht 2 sind durch die Platte 20 hindurchgeführt und zusammen mit dem Strahlungssensor 14 im Gehäuse vergossen.

Fig. 10 zeigt eine mit einer Einrichtung gem. Fig. 6 aufgenommenen Eichkurve mit Argon-Luft-Mischungen. Die Auswerteelektronik wurde hierbei so ausgelegt, daß nach Eichung und über einen Rechner die erfaßte Meßzeitverschiebung, wie sie in Fig. 8 schematisch dargestellt ist, unmittelbar in Volumenprozent umgerechnet wurde. Die Verringerung der Meßzeit zur Erfassung eines Argongehaltes von 25 V-% betrug beispielsweise ca. 2 ms gegenüber der Meßzeit von Normalluft.

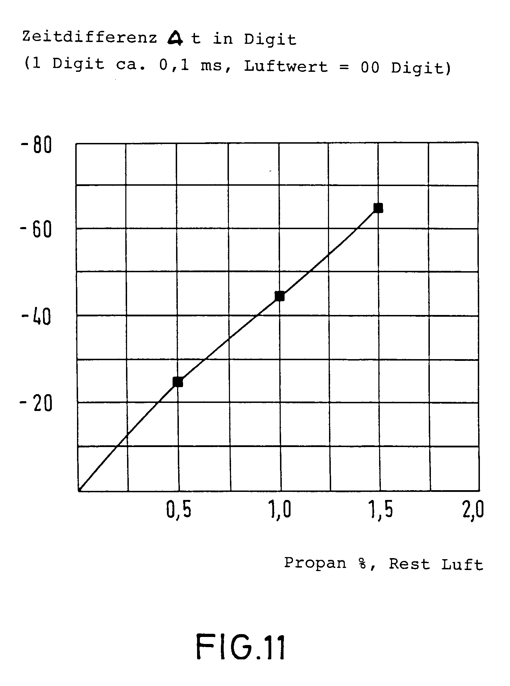

Fig. 11 zeigt im Vergleich hierzu das nach der gleichen Verfahrensweise erfaßte Meßdiagramm zur Bestimmung des Propangehaltes in Luft. Das Diagramm zeigt die Empfindlichkeit des Meßverfahrens von etwa 4 ms Meßzeitverkürzung pro 1% Propan (Restluft).

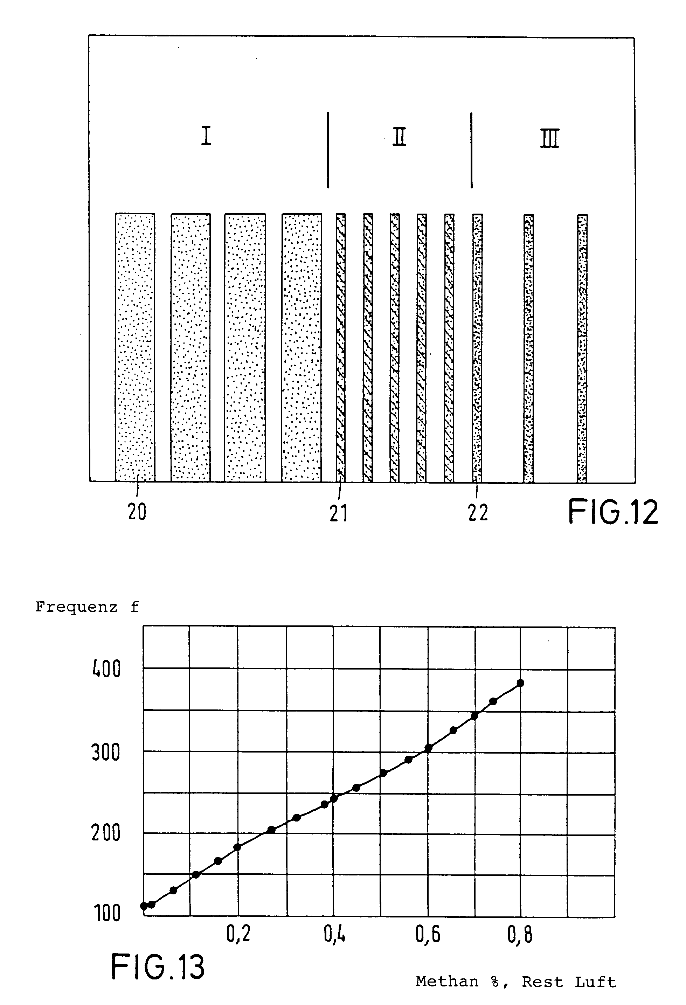

Fig. 12 zeigt in Form einer Oszillographen-Darstellung eine weitere Betriebsweise gem. Fig. 6 schematisch für Luft (Bereich I), für ein Methan-Luft-Gemisch (Bereich II) und für ein Wasserstoff-Luft-Gemisch (Bereich III). Der Heizvorgang wird hierbei zwischen einer unteren und einer oberen Schwelle der Strahlungsintensität getaktet. Die dunkel angelegten Balken 20 (für Luft), 21 (für Luft + Methan) und 22 (für Luft + Wasserstoff) geben hierbei die Aufheizzeit wieder. Die Zwischenräume zwischen den jeweiligen Balken zeigten die Abkühlzeiten. Die Einrichtung ist so eingestellt, daß- jeweils beim Erreichen der oberen Schwelle der Heizstrom ausgeschaltet wird und beim Erreichen der unteren Schwelle der Heizstrom wieder selbsttätig eingeschaltet wird,- so daß also die Heiztakte nicht fest vorgegeben werden sondern sich frei in Abhängigkeit der jeweils zu messenden Gasatmosphäre einstellen können.

Vergleicht man nun den Bereich I (Luft) mit dem Bereich II (Luft + Methan), so zeigt sich, daß bei einem Methan-Luft-Gemisch aufgrund der einsetzenden thermischen Reaktion kürzere Aufheizzeiten bis zur Erreichung der oberen Schwelle (Strahlung) benötigt werden. Charakteristisch ist jedoch, daß die Abkühlzeit zwischen den einzelnen Takten in etwa unverändert bleibt, die Aufeinanderfolge der Heizzeiten, also der Heiztakt sich erhöht. Vergleicht man hierzu den Bereich III (Luft + Wasserstoff), so zeigt sich wiederum, daß aufgrund der thermischen Reaktion zwischen Luft und Wasserstoff die Aufheizzeit verkürzt ist, daß jedoch aufgrund des Nachglüheffektes beim System Luft-Wasserstoff sehr viel längere Abkühlzeiten benötigt werden, also der Heiztakt sich vermindert.

Bei entsprechender Eichung ergibt sich somit die Möglichkeit, das Vorhandensein von unterschiedlichen Gasen über eine Frequenzmessung zu erfassen. Somit ist eine selektierende Messung durch Erfassung der Heiz- und Abkühlzeiten möglich.

Fig. 13 zeigt in einem Meßdiagramm das Schwingverhalten eines Sensors, der in Fig. 9 erläuterten Bauart bei Vorgabe von zwei Strahlungsintensitätsschwellen analog zu der anhand von Fig. 12 beschriebenen Verfahrensweise in Abhängigkeit von der Methankonzentration in einem Methan-Luft-Gemisch.

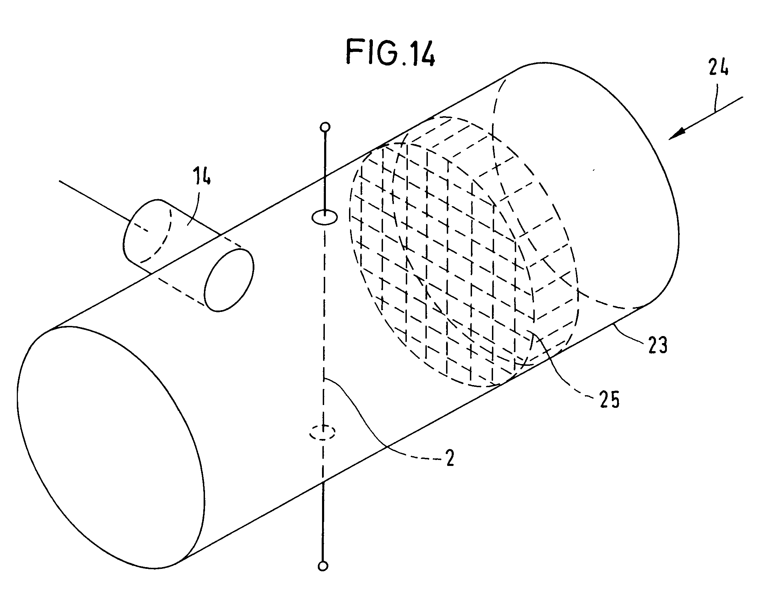

In Fig. 14 ist in einer perspektivischen Darstellung das Meßprinzip in seiner Anwendung als Strömungsmesser dargestellt, sei es zur Bestimmung des Gasflusses überhaupt, sei es zur Bestimmung der Gasgeschwindigkeit. Hierzu wird in ein Rohr 23, das in Richtung des Pfeiles 24 vom Gas durchströmt wird, ein sogenannter Strömungsgleichrichter üblicher Bauart angeordnet. In entsprechendem Abstand hinter dem Strömungsgleichrichter 25 ist wiederum eine elektrisch beheizbare Oberfläche 2 in Form eines Drahtes angeordnet, der das Rohr 23 diametral durchsetzt. In der Rohrwandung ist ein Strahlungssensor 14 angeordnet, über den die Veränderung der Wärmeabgabe des Drahtes 2 in Abhängigkeit von der Durchströmung in Abhängigkeit in der Zeit erfaßt werden kann. Auch hier wird wieder vorteilhaft ausgenutzt, daß der Draht 2 nicht dauernd mit Heizstrom beaufschlagt zu werden braucht, sondern in vorgebbaren Zeitabständen der Meßvorgang durchgeführt werden kann.

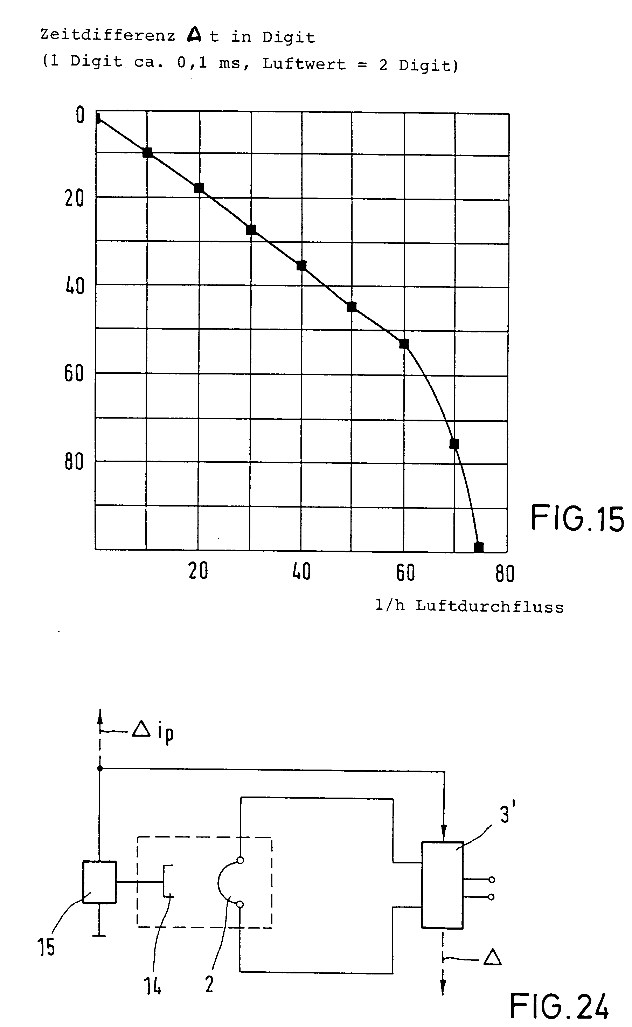

Fig. 15 zeigt das Diagramm einer Messung, mit der eine sich ändernde Durchströmung eines Rohres in der vorstehend angegebenen Verfahrensweise erfaßt wurde.

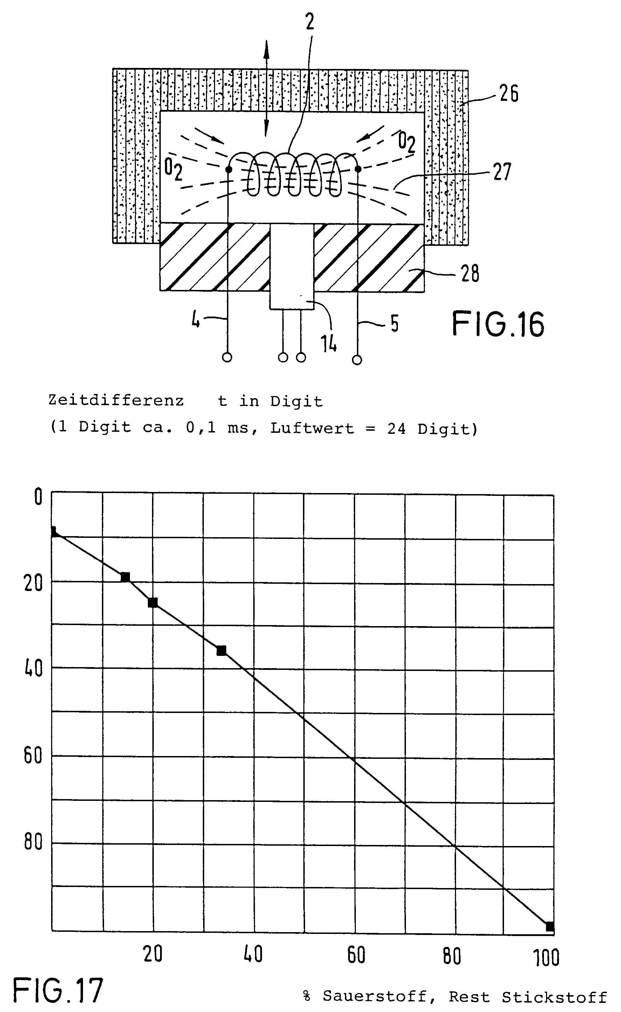

Fig. 16 zeigt eine Abwandlung der anhand von Fig. 9 beschriebenen Meßanordnung. Bei dieser Ausführungsform ist in einem Gehäuse 26, das im wesentlichen wiederum durch ein poröses Material gebildet wird und das als Konvektionssperre dient, eine beheizbare Oberfläche 2 in Form eines Heizdrahtes angeordnet. Der Heizdraht liegt nun in einem inhomogenen Magnetfeld, das durch stromdurchflossene Spulen, Dauermagneten oder dergl. erzeugt werden kann. Der Heizdraht ist bei der gezeigten Ausführungsform jedoch als Heizwendel gestaltet, so daß er zugleich eine Spule bildet, durch die bei einer Beaufschlagung mit dem Heizstrom ein entsprechendes Magnetfeld aufgebaut wird. Dies ist durch die Feldlinien 27 angedeutet. Diese Anordnung erlaubt es,aufgrund der paramagnetischen Eigenschaften von Sauerstoff, auch gasförmigen Sauerstoff in Gasmischungen zu bestimmen und zwar dadurch, daß aufgrund des magnetischen Windes, der eine Konvektion des Sauerstoffs im Bereich des Heizdrahtes 2 bewirkt, wiederum die Veränderung der Wärmeabgabe der beheizten Oberfläche über den IR-Sensor 14 erfaßt werden kann, der in der dargestellten Weise dem Heizwendel zugeordnet und in einer gasundurchlässigen festen Platte 28 des Gehäuses 26 montiert ist.

Fig. 17 zeigt in einem mit einer Meßzelle gem. Fig. 16 erstellten Meßdiagramm die Meßwerte von unterschiedlichen Sauerstoff-Stickstoff-Mischungen.

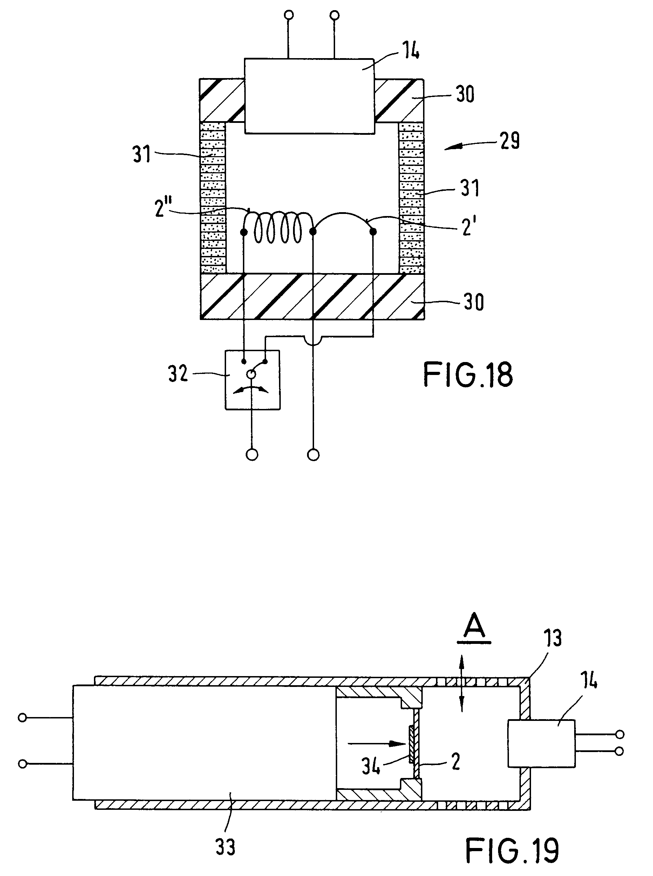

Fig. 18 zeigt eine Meßzelle 29, die eine Kombination der in Fig. 9 dargestellten Meßzelle 13 und der in Fig. 16 dargestellten Meßzelle 26 bildet. Mit Hilfe einer derartigen Meßzelle ist es möglich, in Gasgemischen die brennbaren Anteile sowie den Sauerstoffgehalt zu bestimmen. Wie aus der Darstellung ersichtlich, ist in einem Gehäuse 30, das wiederum mit Platten 31 aus einem gasdurchlässigen Material abgeschlossen ist, ein glatter Heizdraht 2′ und ein als Wendel geformter Heizdraht 2˝ angeordnet, die beide an eine Stromversorgung angeschlossen sind. Den beiden beheizbaren Oberflächen 2′ und 2˝ zugeordnet ist wiederum ein Strahlungssensor 14. Über einen Umschalter 32 kann dann nacheinander der Sauerstoffgehalt des Gasgemisches und der brennbare Anteil in der vorbeschriebenen Weise gemessen werden.

Fig. 19 zeigt eine weitere Ausführungsform für eine Meßzelle. Bei dieser Ausführungsform kann das Meßgas A wiederum über entsprechende Durchtritte in eine Meßzelle 13 eintreten. Die Meßzelle 13 weist wiederum einen Strahlungssensor 14 auf, dem eine beheizbare Oberfläche zugeordnet ist. Bei dieser Ausführungsform ist die beheizbare Oberfläche 2 sorptionsaktiv ausgebildet, beispielsweise durch eine einseitige, das Meßgas berührende Beschichtung aus Aluminiumoxid oder Siliciumoxid für die Anwendung zur Feuchtebestimmung. Die als Platte ausgebildete beheizbare Oberfläche wird von der Rückseite aus über einenLaser 33 als indirekte, pulsierende Heizquelle aufgeheizt. Der Heizfleck auf der Rückseite der beheizbaren Oberfläche 2 ist mit einer dünnen Platte 34 aus Platin versehen, um ein Durchbrennen der Oberfläche zu verhindern. Mit einer derartigen Meßzelle ist es möglich, die Feuchte in Gasen über das Sorptionsverhalten von Wassermolekülen auf der beheizbaren Oberfläche festzustellen. Es lassen sich auch andere Sorptionsvorgänge bei entsprechende Ausbildung der Oberfläche feststellen.

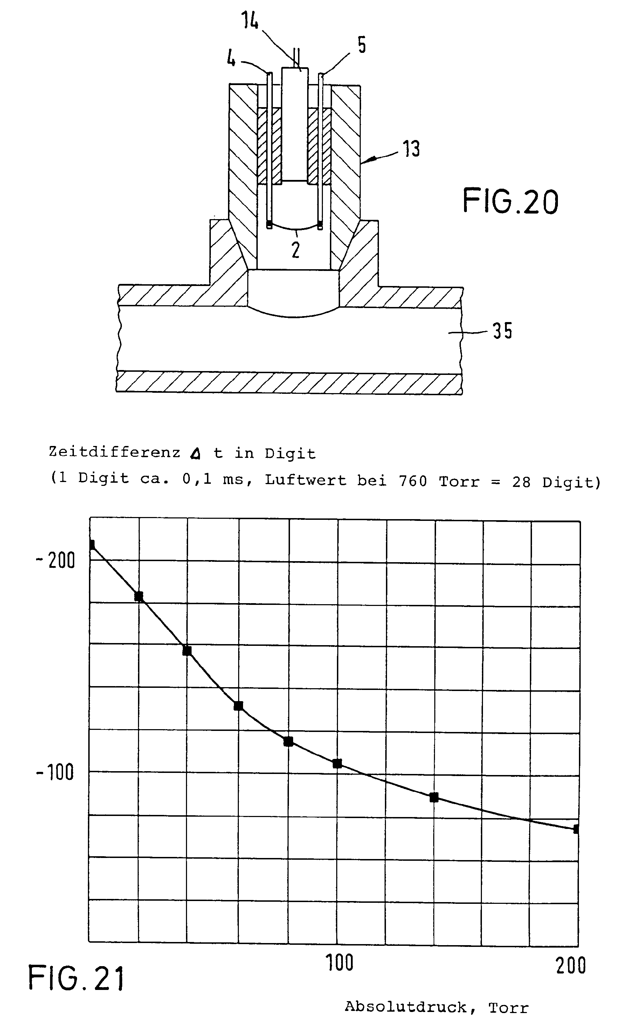

Fig. 20 zeigt die Anwendung zur Druckbestimmung im Vakuumbereich. Hierzu ist wiederum eine Meßzelle 13 in der anhand von Fig. 6 beschriebenen Schaltungsanordnung vorgesehen, die mit ihrer beheizbaren Oberfläche 2 in den Raum 35 hineinragt, dessen Druck zu bestimmen ist. Der beheizbaren Oberfläche 2 in Form eines Drahtes ist ein Strahlungssensor 14, beispielsweise ein IR-Sensor zugeordnet. Die Meßzelle 13 ist hierbei vakuumdicht angebracht. Die Druckbestimmung erfolgt auch hier über die Erfassung des Wärmetransportes der Gasmoleküle, der ab einem bestimmten Unterdruck über die Zunahme der freien Weglänge dominierend wird und damit erfaßbare Meßergebnisse bewirkt.

Fig. 21 zeigt ein Meßergebnis im Bereich 0 bis 200 Torr.

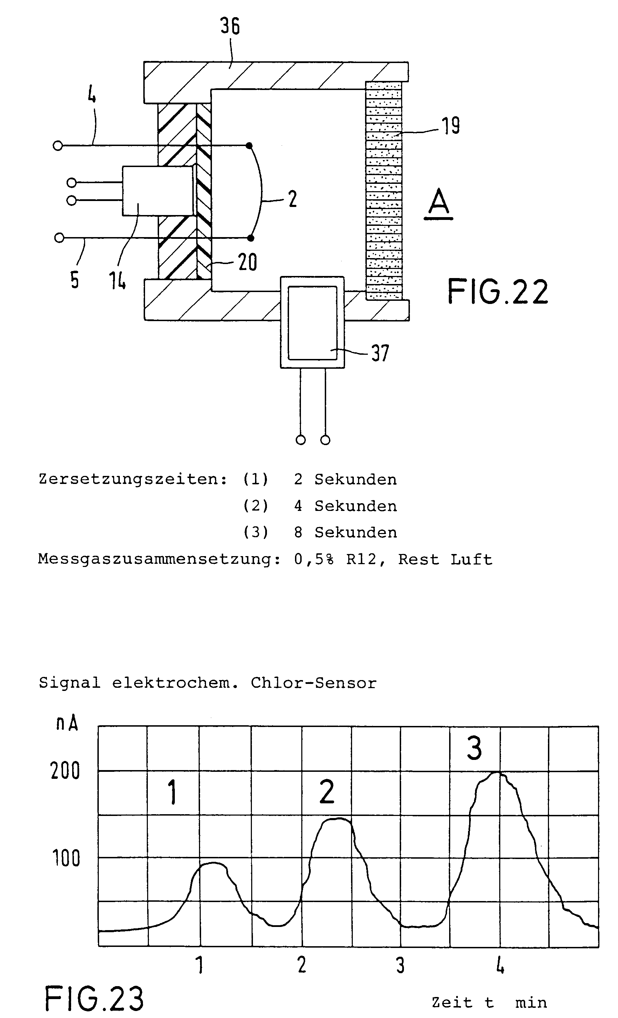

Fig. 22 zeigt eine Ausführungsform einer Meßzelle 36, mit deren Hilfe es möglich ist, über eine gesteuerte thermische Zersetzung von Gasen mit nachgeschalteter Detektion der Zersetzungsprodukte Rückschlüsse auf die Konzentration des unzersetzten Gases zu ziehen. Die Meßzelle besteht wiederum aus einem abgeschlossenen Gehäuse 36 mit einer gasdurchlässigen Platte 19, so daß das Meßgas A in diesen abgeschlossenen Raum eintreten kann. Innerhalb des Raumes ist eine beheizbare Oberfläche in Form eines Drahtes angeordnet, der, wie anhand von Fig. 9 beschrieben, mit einer Stromversorgung in Verbindung steht und dem ein IR-Sensor 14, abgeschirmt durch eine Platte 20 aus IR-durchlässigem Material zugeordnet ist. In den Innenraum ragt ferner ein Gassensor 37, z. B. ein Halbleiter- oder elektro-chemischer Sensor herein, der für die Bestimmung eines bestimmten Gases als Zersetzungsprodukt ausgelegt ist.

Soll nun beispielsweise festgestellt werden, ob das Meßgas einen Fluor-Chlor-Kohlenwasserstoff enthält, beispielsweise FCKW(R12), so wird die beheizbare Oberfläche 2 so weit aufgeheizt, daß die Cracktemperatur des FCKW, ggf. nach katalytischer Absenkung erreicht wird. Ist im Meßgas FCKW enthalten, wird durch die Crackung Chlor abgespalten. Der Gassensor 37 ist hierbei für die Erfassung von Chlor ausgelegt, so daß über das freiwerdende Chlor das Vorhandensein des FCKW nachgewiesen werden kann.

Fig. 23 zeigt ein Meßdiagramm. Bei einer Meßgaszusammensetzung von 0,5% R12 in Luft wurde dreimal hintereinander in Abständen von etwa zwei Minuten der Glühdraht aufgeheizt. Bei der ersten Messung wurde die Cracktemperatur über zwei Sekunden aufrechterhalten, bei der zweiten Messung über vier Sekunden und bei der dritten Messung über acht Sekunden. Wie das Meßdiagramm zeigt, konnte am Chlorsensor jeweils für den Meßpunkt das Vorhandensein von Chlor festgestellt werden, wobei die erfaßte Chlormenge in etwa proportional zur Zersetzungszeit war. Hierdurch zeigt sich, daß nach dem erfindungsgemäßen Verfahren auch für diesen Einsatzfall zuverlässige und wiederholbare Meßergebnisse erzielbar sind.

Fig. 24 zeigt ein Blockschaltbild einer gegenüber Fig. 6 vereinfachten Ausführungsform, wie sie insbesondere für stationäre Gaswarngeräte mit externer Stromversorgung zweckmäßig ist. Die Meßzelle 13 enthält wiederum eine beheizbare Oberfläche 2 in Form eines stromdurchflossenen Heizdrahtes, der ständig von einem vorgegebenen Strom I bei vorgegebener Spannung V durchflossen wird. Über den Sollwertsteller 15 wird eine für das in der zu überwachenden Atmosphäre erwartende Schadgas charakteristische Strahlungsintensitätsschwelle vorgegeben. Fließt nun das Schadgas ein, dann ändert, beispielsweise erhöht sich die vom Strahlungssensor 14 laufend erfaßte Strahlungsintensität bis zur vorgegebenen Schwelle. Hierdurch wird im Sollwertsteller ein Signal ausgelöst, durch das über einen Regler in der elektrischen Energieversorgung 3′ der Heizstrom zurückgenommen und zugleich ein Alarm- und/oder Steuersignal ausgelöst wird (Alarmausgang Δ). Zugleich wird der Heizdraht vor unzulässiger Überhitzung geschützt. Das Alarmsignal kann aber auch unmittelbar über den Sollwertsteller 15 ausgelöst werden, was durch den Signalweg Δiₚ angedeutet ist.

Der Heizstrom kann nun entweder ganz abgeschaltet werden oder nur so weit reduziert werden, bis wieder die vorgegebene untere Intensitätsschwelle erreicht ist. Hierdurch wird dann die Empfindlichkeit herabgesetzt. Anstelle einer Veränderung bzw. Reduzierung des Heizstromes kann entsprechend auch die Heizspannung verändert werden.

## Patentansprüche

1. Verfahren zur Bestimmung von chemischen und/oder physikalischen Eigenschaften und/oder physikalischen Zuständen einer Gasatmosphäre, bei dem die zu untersuchende Gasatmosphäre mit einer beheizbaren Oberfläche in Berührung gebracht wird, dadurch gekennzeichnet, daß die beheizbare Oberfläche durch die Zufuhr von Energie während einer Heizzeit von einer niedrigen Temperaturlage auf eine vorgebbare höhere Temperaturlage hochgeheizt wird und bei Erreichen der höheren Temperaturlage die Energiezufuhr abgeschaltet wird, und daß die durch die Gasatmosphäre beeinflußte Wärmeabgabe der beheizbaren Oberfläche in Abhängigkeit von der Zeit zur Erzeugung eines Meßsignals, vorzugsweise eines elektrischen Meßsignals, ausgewertet wird.

2. Verfahren nach Anspruch 1, dadurch gekennzeichnet, daß die Aufheizung der beheizbaren Oberfläche durch Energiezufuhr während einer Heizzeit in einem Heiztakt von zeitlich aufeinanderfolgenden Abständen erfolgt.

3. Verfahren nach Anspruch 1 oder 2, dadurch gekennzeichnet, daß die Beeinflussung der Wärmeabgabe der beheizbaren Oberfläche durch die Gasatmosphäre durch Messung der Strahlenintensität der von der Oberfläche ausgehenden Wärmestrahlung bestimmt wird.

4. Verfahren nach Anspruch 1, 2 oder 3, dadurch gekennzeichnet, daß zur Bestimmung der Gasatmosphäre die Zeit gemessen wird, in der, vom Beginn der Heizzeit ausgehend, eine vorgegebene Intensitätsschwelle der Wärmestrahlung erreicht wird.

5. Verfahren nach Anspruch 1, 2 oder 3, dadurch gekennzeichnet, daß die von der Gasatmosphäre beeinflußte Wärmeabgabe bei einer elektrisch beheizbaren Oberfläche durch Messung des für die Aufheizung der Oberfläche benötigten elektrischen Stromes bei vorgegebener Spannung bestimmt wird.

6. Verfahren nach einem der Ansprüche 1 bis 5, dadurch gekennzeichnet, daß die beheizbare Oberfläche nach dem Abschalten der Energiezufuhr in der voraufgegangenen Heizzeit jeweils nach Erreichen einer Mindesttemperaturlage wieder aufgeheizt wird.

7. Verfahren nach einem der Ansprüche 1 bis 6, dadurch gekennzeichnet, daß jeweils die zeitliche Folge, das heißt der Heiztakt der aufeinanderfolgenden Heizzeiten fest vorgebbar ist.

8. Verfahren nach einem der Ansprüche 1 bis 5, dadurch gekennzeichnet, daß der Beginn einer Heizzeit durch eine vorgegebene untere Meßwertschwelle und das Ende einer Heizzeit durch eine vorgegebene ober Meßwertschwelle bestimmt ist und daß die zeitliche Folge der Heizzeiten als Meßsignal zur Bestimmung der Gasatmosphäre dient.

## Claims

1. A method for determining the chemical and/or physical properties and/or physical conditions of a gas atmosphere, in which the gas atmosphere to be investigaated is brought into contact with a heatable surface, characterized in that the heatable surface is heated up from a lower temperature to a predeterminable higher temperature by the supply of energy during a heating time and when the higher temperature is reached the energy supply is switched off and in that the time-dependent heat loss from the heatable surface, influenced by the gas atmosphere, is evaluated to provide a measuring signal, preferably an electrical measuring signal.

2. A method according to claim 1, characterized in that the heating of the heatable surface by energy supply during a heating time is effected in a heating cycle of temporally succcessive intervals.

3. A method according to claim 1 or claim 2, characterized in that influencing of the heat loss from the heatable surface by the gas atmosphere is determined by measurement of the radiation intensity of the thermal radiation radiating from the surface.

4. A method according to claim 1, claim 2 or claim 3, characterized in that, to determine the gas atmosphere, the time is measured in which, starting from the beginning of the heating time, a predetermined thermal radiation intensity threshold is reached.

5. A method according to claim 1, claim 2 or claim 3, characterised in that the heat loss influenced by the gas atmosphere is determined, with an electrically heatable surface, by measurement of the electric current at a predetermined voltage required to heat the surface.

6. A method according to any one of claims 1 to 5, characterized in that the heatable surface is re-heated after switching-off of the energy supply in the previous heating time after arrival at a minimum temperature.

7. A method according to any one of claims 1 to 6, characterized in that the temporal series, i.e. the heating cycle, of the successive heating times may be fixedly predetermined.

8. A method according to any one of claims 1 to 5, characterized in that the beginning of a heating time is determined by a predetermined lower measured value threshold and the end of a heating time is determined by a predetermined upper measured value threshold and in that the temporal series of heating times serves as a measuring signal for determining the gas atmosphere.

## Revendications

1. Procédé pour la détermination de propriétés chimiques et/ou physiques et/ou d'états physiques d'un milieu gazeux, dans lequel le milieu gazeux à examiner est mis en contact avec une surface pouvant être chauffée, caractérisé par le fait que la surface pouvant être chauffée est chauffée, par alimentation d'énergie pendant une période de chauffage, d'un domaine de température inférieure à un domaine de température supérieure prédéterminable et que l'alimentation d'énergie est interrompue lorsque le domaine de température supérieure est atteint et que le dégagement de chaleur de la surface pouvant être chauffée, influencé par le milieu gazeux, est utilisé en fonction du temps pour la génération d'un signal de mesure, de préférence un signal de mesure électrique.

2. Procédé selon la revendication 1, caractérisé par le fait que le chauffage de la surface pouvant être chauffée se fait par alimentation d'énergie pendant une période de chauffage selon un cycle de chauffage à intervalles se succédant dans le temps.

3. Procédé selon la revendication 1 ou 2, caractérisé par le fait que l'influence du dégagement de chaleur de la surface pouvant être chauffée par le milieu gazeux est déterminée en mesurant l'intensité de rayonnement du rayonnement de chaleur partant de la surface.

4. Procédé selon la revendication 1, 2 ou 3, caractérisé par le fait que pour déterminer le milieu gazeux, on mesure le temps, à partir du début de la période de chauffage, au bout duquel est atteint un seuil d'intensité prédéterminé du rayonnement de chaleur.

5. Procédé selon la revendication 1, 2 ou 3, caractérisé par le fait que le dégagement de chaleur influencé par le milieu gazeux est déterminé, pour une surface pouvant être chauffée électriquement, en mesurant le courant électrique nécessaire pour le chauffage de la surface sous une tension prédéterminée.

6. Procédé selon l'une des revendications 1 à 5, caractérisé par le fait que la surface pouvant être chauffée est, après interruption de l'alimentation d'énergie au cours de la période de chauffage précédente, à nouveau chauffée chaque fois qu'est atteint un domaine de température minimale.

7. Procédé selon l'une des revendications 1 à 6, caractérisé par le fait que la succession dans le temps, c'est-à-dire le cycle de chauffage, des périodes de chauffage successives peut chaque fois être prédéterminée de manière fixe.

8. Procédé selon l'une des revendications 1 à 5, caractérisé par le fait que le début d'une période de chauffage est déterminé par un seuil de valeur de mesure inférieur prédéterminé et la fin d'une période de chauffage par un seuil de valeur de mesure supérieur prédéterminé et que la succession dans le temps des périodes de chauffage sert de signal de mesure pour la détermination du milieu gazeux.
